# EUROPÄISCHE PATENTSCHRIFT

(11) **EP 1 855 908 B1**
(45) Veröffentlichungstag und Bekanntmachung des Hinweises auf die Patenterteilung: **30.12.2009**
(21) Anmeldenummer: 06704683.9
(22) Anmeldetag: 15.02.2006
(51) Int. Cl.: B60K 31/00

(54) **FAHRERASSISTENZSYSTEM MIT MEHREREN ASSISTENZFUNKTIONEN**
DRIVER ASSISTANCE SYSTEM COMPRISING SEVERAL ASSISTANCE FUNCTIONS
SYSTEME D'ASSISTANCE AU CONDUCTEUR COMPRENANT PLUSIEURS FONCTIONS D'ASSISTANCE

(30) Priorität: 01.03.2005 DE 102005009146
(43) Veröffentlichungstag der Anmeldung: 21.11.2007
(73) Patentinhaber: ROBERT BOSCH GMBH, 70442 Stuttgart (DE)
(72) Erfinder: LUCAS, Bernhard, 74354 Besigheim (DE); WILHELM, Ulf, 71277 Rutesheim (DE); RANDLER, Martin, 88090 Immenstaad (DE)
(86) Internationale Anmeldenummer: PCT/EP2006/050947
(87) Internationale Veröffentlichungsnummer: WO 2006/092361

(56) Entgegenhaltungen:
- WO-A-02/084329
- WO-A-2004/045898
- GB-A- 2 394 076
- JORDAN R ET AL: "Safety application specific requirements on the data processing of environmental sensors" INTELLIGENT VEHICLES SYMPOSIUM, 2004 IEEE PARMA, ITALY JUNE 14-17, 2004, PISCATAWAY, NJ, USA,IEEE, 14. Juni 2004 (2004-06-14), Seiten 907-912, XP010727769 ISBN: 0-7803-8310-9

## Beschreibung

### Stand der Technik

Die Erfindung betrifft ein Fahrerassistenzsystem für Kraftfahrzeuge, mit einer Sensoreinrichtung zur Messung von Daten über die Umwelt des Fahrzeugs, mindestens zwei Assistenzfunktionen, die von den gemessenen Daten abhängig sind, und einer Datenverarbeitungseinrichturig, die die gemessenen Daten auswertet und für jede Assistenzfunktion mindestens eine spezifische Umwelthypothese generiert, die Ausgabedaten in einer für die betreffende Assistenzfunktion aufbereiteten Form bereitstellt.

Ein Fahrerassistenzsystem dieser Art ist aus WO 02/084329 A bekannt.

Unter einem Fahrerassistenzsystem versteht man allgemein eine Einrichtung in einem Kraftfahrzeug, die den Fahrer bei der Führung des Fahrzeugs unterstützt. Ein Beispiel eines solchen Fahrerassistenzsystems ist etwa ein adaptiver Geschwindigkeitsregler, der auch als ACC-System (Adaptive Cruise Control) bezeichnet wird. Dieses Systems ermöglicht es, vorausfahrende Fahrzeuge mit Hilfe eines Sensors, typischerweise mit Hilfe eines Radarsensors, zu orten und die Geschwindigkeit des eigenen Fahrzeugs in Abhängigkeit von gemessenen Abstand zum vorausfahrenden Fahrzeug zu regeln, so dass das vorausfahrende Fahrzeug, nachstehend als "Folgefahrzeug" bezeichnet, in einem angemessenen Sicherheitsabstand verfolgt wird.

Unter Fahrerassistenzsystemen sollen hier auch Sicherheitssysteme verstanden werden, die den Fahrer vor Gefahren warnen und/oder automatisch in die Fahrzeugführung eingreifen, um die Gefahren möglichst abzuwenden oder den Schaden zu begrenzen, oder die passive Sicherheitssysteme wie Airbags, Gurtstraffer und dergleichen, frühzeitig aktivieren, um die Unfallfolgen zu mildern. Systeme der letztgenannten Art werden z. B. als Pre-Crash-Systeme oder PSS-Systeme (Predictive Safety System) bezeichnet.

Allgemein umfaßt ein Fahrerassistenzsystem eine sensorische Komponente zur Erfassung des Verkehrsumfelds, einschließlich mindestens eines Sensors, etwa eines Radarsensors, und zugehöriger elektronischer Einrichtungen zur Datenaufbereitung, eine aktorische Komponente, die etwa in das Antriebssystem, das Bremssystem oder die Lenkung des Fahrzeugs eingreift und/oder eine Fahrerschnittstelle zur Ausgabe von Warnsignalen an den Fahrer aufweist, sowie eine Datenverarbeitungseinrichtung, die anhand der von der sensorischen Komponente bereitgestellten Daten die Steuersignale für die aktorische Komponente erzeugt.

Die Funktion der Datenverarbeitungseinrichtung beruht zumindest implizit auf einer oder mehreren Umwelthypothesen, die festlegen, in welcher Weise die Sensordaten interpretiert werden. Zum Beispiel könnte eine Umwelthypothese für die Assistenzfunktion ACC etwa wie folgt lauten: "Es existiert ein Folgefahrzeug, das in bezug auf das eigene Fahrzeug den Abstand d und die Relativgeschwindigkeit v hat". Da die von der Sensoreinrichtung, etwa dem Radarsensor, gelieferten Daten in aufeinanderfolgenden Meßzyklen fortlaufend aktualisiert werden, könnte die Umwelthypothese ergänzend auch die Aussage enthalten: "Das im aktuellen Zyklus erkannte Folgefahrzeug ist identisch mit dem Folgefahrzeug, das in den vorangegangenen Meßzyklen geortet wurde."

Wenn ein Fahrerassistenzsystem mehrere Assistenzfunktionen aufweist, z. B. eine Kombination aus ACC und PSS, so ist es wünschenswert, die für die ACC-Funktion benötigte Sensorkomponente, also beispielsweise den Radarsensor und möglichst auch das zugehörige Datenaufbereitungssystem, auch für die PSS-Funktion zu nutzen, damit der insgesamt erforderliche Installationsaufwand nicht zu groß wird.

Spätestens auf der Stufe der Datenaufbereitung stößt dieses Konzept jedoch an seine Grenzen, weil die Meßdaten für die verschiedenen Assistenzfunktionen in unterschiedlicher, spezifisch an die jeweilige Funktion angepaßter Weise aufbereitet werden müssen. Dementsprechend sind auch die zugrunde liegenden Umwelthypothesen jeweils spezifisch an die Assistenzfunktion angepaßt. Zum Beispiel könnte eine Umwelthypothese für die PCC-Funktion lauten: "Es existiert ein Hindernis, dessen Abstand mindestens dₘᵢₙ beträgt und dessen (zumeist negative) Relativgeschwindigkeit mindestens vₘᵢₙ beträgt." Zwar sind die Ausgangsgrößen, Abstand und Relativgeschwindigkeit, die an die ACC-Funktion einerseits und die PSS-Funktion andererseits übergeben werden, formal die gleichen, doch sind die Bedeutungen und die speziellen Zahlenwerte nicht identisch. Während es für die Abstandsregelung im Rahmen der ACC-Funktion genügt, den wahrscheinlichsten Wert für den Abstand und die Relativgeschwindigkeit zu kennen, sind bei einer Sicherheitsfunktion wie PSS auch die Toleranzgrenzen oder die Wahrscheinlichkeitsverteilungen dieser Größen relevant. Insbesondere wird man sich bei einer Sicherheitsfunktion nicht so sehr für den wahrscheinlichsten Wert des Abstands interessieren, sondern, unter der Annahme des ungünstigsten Falles, eher für den Abstand, den das Hindernis unter Berücksichtigung aller Meßungenauigkeiten mindestens noch vom eigenen Fahrzeug hat.

Entsprechendes gilt auch für andere Größen, die aus den vom Radarsensor gelieferten Rohdaten berechnet werden. Beispielsweise ist es bei einem winkelauflösenden Radarsensor möglich, aus dem gemessenen Azimutwinkel eines Objekts und dem Abstand die Querposition y des Objekts in bezug auf die Längsachse des eigenen Fahrzeugs zu berechnen. Bei einem Folgefahrzeug im Rahmen der ACC-Funktion ist diese Größe relevant für die Entscheidung, ob sich das Fahrzeug auf der eigenen Fahrspur oder auf einer Nebenspur befindet. Die Definition "Folgefahrzeug" schließt ein, daß es sich um ein Fahrzeug auf der eigenen Spur handelt. Bei der PSS-Funktion wird man dagegen auch Hindernisse berücksichtigen, die nur zum Teil in die eigene Fahrspur hineinragen oder sich von der Seite her der eigenen Fahrspur annähern. Außerdem wäre hier eine relevante Fragestellung, ob es eine Möglichkeit gibt, das Hindernis zu umfahren. In diesem Zusammenhang wäre auch eine zusätzliche Information über die vermutliche Breite des Objekts wünschenswert. Eine solche Information läßt sich im Prinzip aus den Radardaten gewinnen, wenn es bei einem sehr breiten Objekt, etwa einem LKW, mehrere Reflexionszentren gibt, so daß man Radarechos erhält, für die sich identische Abstände und Relativgeschwindigkeiten aber leicht unterschiedliche Azimutwinkel ergeben. Für die Abstandsregelung im Rahmen der ACC-Funktion würde diese Breiteninformation hingegen nicht benötigt.

Diese Beispiele illustrieren, daß die verschiedenen Assistenzfunktionen zwar auf teilweise übereinstimmenden Meßgrößen beruhen, jedoch jeweils eine spezifische Aufbereitung dieser Meßgrößen erfordern.

Auch die den Umwelthypothesen zugrunde liegende Begriffe "Folgefahrzeug" und "Hindernis" sind nicht identisch, da ihre Definitionen von unterschiedlichen Kriterien und Randbedingungen abhängig sind. Zum Beispiel kann die Umwelthypothese "Folgefahrzeug" voraussetzen, daß das ACC-System aktiv ist und sich im Folgemodus befindet. Da ACC-Systeme typischerweise nur aktivierbar sind, wenn die Geschwindigkeit des eigenen Fahrzeugs oberhalb eines bestimmten Mindestwertes liegt, impliziert dies auch bestimmte Bedingungen hinsichtlich der Geschwindigkeit des eigenen Fahrzeugs. Typiserweise impliziert der Begriff "Folgefahrzeug" auch, daß der Fahrer dieses Fahrzeugs eher komforotrientiert fährt, also voraussichtlich keine abrupten Manöver wie Vollbremsungen oder dergleichen vornehmen wird. Für die Umwelthypothese "Hindernis" mag es zwar auch entsprechende Randbedingungen geben, doch sind sie nicht mit denen für ein Folgefahrzeug identisch. Z. B. würde ein Vorderfahzeug, das plötzlich eine Notbremsung ausführt, als Hindernis aber nicht mehr als Folgefahrzeug qualifiziert.

Bei den heute gebräuchlichen ACC-Systemen wird der Begriff "Folgefahrzeug" auch implizieren, daß es sich um ein bewegtes Objekt handelt. Die Umwelthypothese "Hindernis" im Rahmen einer PSS-Funktion sollte sich dagegen möglichst auch auf stehende Objekte beziehen. Wieder anders verhält es sich beispielsweise bei einer Variante der ACC-Funktion, die als "Stop and Go" bezeichnet wird und die es beim Auffahren auf ein Stauende gestattet, das eigene Fahrzeug in den Stand zu bremsen, wenn das Vorderfahrzeug anhält. In diesem Fall wird die Definition des Begriffes "Folgefahrzeug" auch stehende Objekte einschließen, sofern diese Objekte sich irgendwann in der Vergangenheit bewegt haben.

Aufgrund der unterschiedlichen Begriffsdefinitionen, die den verschiedenen Umwelthypothesen zugrunde liegen, und aufgrund der unterschiedlichen Natur der Ausgabedaten für die verschiedenen Assistenzfunktionen ist es bisher allenfalls möglich, die Rohdaten eines gemeinsamen Sensors zu nutzen, doch muß die weitere Aufbereitung der Daten parallel in speziell angepaßten Verarbeitungsstufen erfolgen.

### Vorteile der Erfindung

Die Erfindung mit den in Anspruch angegebenen Merkmalen bietet den Vorteil, daß sie bei Fahrerassistenzsystemen mit mehreren Assistenzfunktionen eine bessere Nutzung von Synergien ermöglicht, so daß die für die verschiedenen Funktionen benötigten Daten effizienter erfaßt und aufbereitet werden können. Dies führt insbesondere zu einer Verringerung des Datenverarbeitungsaufwands, so daß einerseits Einsparungen bei der benötigten Hardware ermöglicht werden oder andererseits, bei gleicher Rechenkapazität, eine differenziertere Erfassung des Verkehrsumfelds, ggf. mit höherer zeitlicher Auflösung, ermöglicht wird. Ein weiterer Vorteil ist die einfache Erweiterbarkeit des Systems um zusätzliche Assistenzfunktionen und/oder Auswertungskriterien.

Dies wird erfindungsgemäß dadurch erreicht, daß die für die verschiedenen Assistenzfunktionen benötigten Umwelthypothesen in einer modular aufgebauten Datenstruktur explizit gemacht werden. Dazu wird die Umwelthypothese in mehrere Teilhypothesen gegliedert, die in einer bestimmten logischen Beziehung zueinander stehen. Die Teilhypothesen und ihre logischen Beziehungen sind dabei so definiert, daß sie jeweils bestimmten Begriffen sowie den logischen Beziehungen zwischen diesen Begriffen entprechen. Zum Beispiel können zwei Teilhypothesen "Hindernis" und "Folgefahrzeug" definiert sein, deren logische Beziehung eine Teilmengenrelation (die Folgefahrzeuge bilden eine Teilmenge der Menge der Hindernisse) bzw. eine Implikation ist (die Existenz eines Folgefahrzeugs impliziert die Existenz eines Hindernisses).

Der technisches Vorteil besteht darin, daß nun die Hypothese "Folgefahrzeug" und die zugehörigen Ausgabedaten für die ACC-Funktion nicht von Grund auf aus den Rohdaten des Radarsensors generiert zu werden brauchen, sondern daß dazu auf die Verarbeitungsergebnisse zurückgegriffen werden kann, die bereits bei der Erzeugung der Hypothese "Hindernis" erhalten wurden. Die Verarbeitungsergebnisse bzw. Ausgabedaten der Teilhypothese "Hindernis" werden somit zweifach genutzt, nämlich einerseits zur Weiterverarbeitung in der Hypothese "Folgefahrzeug" und andererseits direkt als Ausgabedaten für die PSS-Funktion. Auf diese Weise ermöglicht es die Erfindung, daß Sensorkomponenten von mehreren Assistenzfunktionen gemeinsam genutzt werden können. In der Praxis kann die Struktur der Umwelthypothesen natürlich wesentlich komplexer sein und wesentlich mehr Teilhypothesen umfassen. Auch die logischen Beziehungen zwischen ihnen sind nicht auf Implikationen beschränkt, sondern können auch durch andere logische Operatoren wie UND, ODER und NICHT und dergleichen gebildet werden.

Ein besonderer Vorteil ist die leichte Erweiterbarkeit des Systems, die sich daraus ergibt, daß im Prinzip jede Teilfunktion als "Verdichtungsknoten" dienen kann, der geeignet vorverdichtete Daten für neu hinzugefügte Teilhypothesen und/oder Assistenzfunktionen zur Verfügung stellt. Vorteilhaft ist auch die Möglichkeit, die Meßergebnisse mehrerer unabhängig voneinander arbeitender Sensoren zu fusionieren, indem die anhand der Meßergebnisse der verschiedenen Sensoren erhaltenen Teilhypothesen logisch miteinander verknüpft werden.

### Zeichnung

Ausführungsbeispiele der Erfindung sind in den Zeichnungen dargestellt und in der nachfolgenden Beschreibung näher erläutert.

Es zeigen:
- Figur 1: ein Blockdiagramm eines erfindungsgemäßen Fahrerassistenzsystems;
- Figur 2: ein Blockdiagramm eines Vergleichsbeispiels für ein Fahrerassistenzsystem;
- Figur 3: eine Datenstruktur einer Teilhypothese in dem Assistenzsystem nach Figur 1; und
- Figur 4: ein Blockdiagramm eines Fahrerassistenzsystems gemäß einem weiterem

### Ausführungsbeispiel der Erfindung

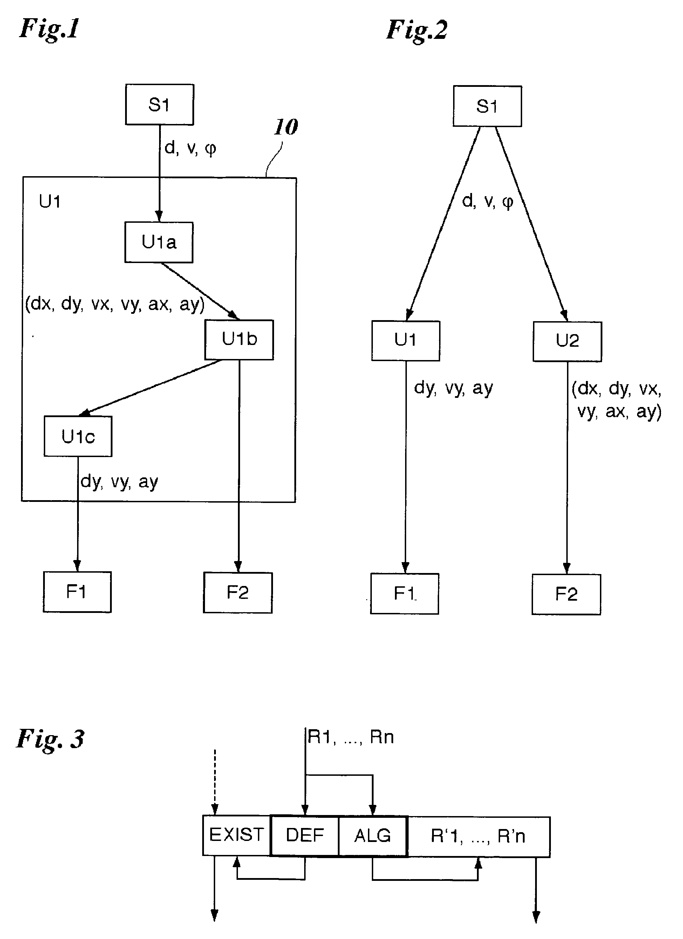

Das in Figur 1 gezeigte Fahrerassistenzsystem umfaßt einen Sensor S1, beispielsweise einen Radarsensor, zur Erfassung des Verkehrsumfelds, eine Datenverarbeitungseinrichtung 10, die beispielsweise durch einen oder mehrere Mikroprozessoren gebildet wird und die im gezeigten Beispiel anhand der Daten des Sensors S1 eine Umwelthypothese U1 generiert, sowie zwei Assistenzfunktionen F1, F2, bei denen es sich beispielsweise um eine ACC-Funktion und eine PSS-Funktion handeln kann.

Die Assistenzfunktionen F1, F2 umfassen jeweils eine nicht näher dargestellte aktorische Komponente, mit der in andere Teilsystems des Fahrzeugs eingegriffen wird, sowie eine intelligente Komponente, die die anhand der Umwelthypothese U1 aufbereiteten Daten weiterverarbeitet und Steuersignale für die aktorische Komponente erzeugt. Bei der aktorischen Komponente kann es sich beispielsweise um das Antriebssystem oder das Bremssystem des Fahrzeugs handeln oder auch um einen Warnsignalgeber zur Ausgabe eines Warnsignals an den Fahrer. Die intelligente Komponente kann jeweils durch einen eigenen Rechner gebildet werden oder wahlweise auch durch ein Softwaremodul, das auf der Datenverarbeitungseinrichtung 10 läuft.

Die Umwelthypothese U1 hat im gezeigten, stark vereinfachten Beispiel eine vernetzte Struktur mit drei Teilhypothesen U1a, U1b und U1c. Die Teilhypothesen U1b und U1c bilden im gezeigten Beispiel zugleich spezifische Umwelthypothesen, die jeweils einer der Assistenzfunktionen F1 und F2 zugeordnet sind und Ausgabedaten liefern, die spezifisch im Hinblick auf die jeweilige Assistenzfunktion aufbereitet sind.

Der Sensor S1 liefert "Rohdaten", beispielsweise die Abstände d, Relativgeschwindigkeiten v und Azimutwinkel von Objekten, die durch den Radarsensor im Vorfeld des Fahrzeugs geortet wurden. Jedes lokale Reflexionsmaximum im empfangenen Radarsignal ist durch einen entsprechenden Satz der Daten d, v und gekennzeichnet und wird einem Objekt einer Umwelthypothese zugeordnet. Der Radarsensor arbeitet zyklisch, und in jedem Meßzyklus werden die Datensätze für die georteten Objekte aktualisiert.

Die Teilhypothesen U1a, U1b und U1c repräsentieren jeweils einen bestimmten Begriff, der durch geeignete Definitionskriterien festgelegt ist und mit dem ein spezieller Aspekt der Umwelt beschrieben wird. Als Beispiel kann angenommen werden, daß die Teilhypothese U1a dem Begriff "potentielles Hindernis" entspricht, die Teilhypothese U1b dem Begriff "echtes Hindernis" und die Teilhypothese U1c dem Begriff "Folgefahrzeug". Unter einem potentiellen Hindernis ist dabei ein Objekt zu verstehen, bei dem die Möglichkeit besteht, es aber noch nicht sicher ist, daß dieses Objekt eine Reaktion einer der Assistenzfunktion F1, F2 erfordert. Unter einem echten Hindernis ist ein Objekt zu verstehen, für das aufgrund plausibler Annahmen als sicher gelten kann, daß es eine Reaktion einer der Assistenzfunktionen erfordert. Die echten Hindernisse bilden somit eine Teilmenge der Menge der potentiellen Hindernisse. Unter einem Folgefahrzeug ist ein Objekt zu verstehen, bei dem sich aufgrund plausibler Annahmen um ein Fahrzeug handelt, das auf der vom eigenen Fahrzeug befahrenen Spur unmittelbar vorausfährt und von der Assistenzfunktion F1 (ACC) als Zielobjekt für die Abstandsregelung ausgewählt worden ist oder ausgewählt werden kann oder das vom Fahrer in einer manuellen Flogefahrt verfolgt wird. Die Folgefahrzeuge bilden somit eine Teilmenge der Menge der echten Hindernisse.

Die Umwelthypothese U1 kann somit auch als Bibliothek von vordefinierten Begriffen aufgefaßt werden, für die jeweils spezielle Definitionskriterien gelten und zwischen denen bestimmte logische Beziehungen bestehen.

Bei der Erzeugung der Teilhypothese U1a wird aus den vom Sensor S1 gelieferten Daten d, v, für jedes Objekt ein Datensatz berechnet, der die Ortskoordinaten dx, dy des Objektes in einem zweidimensionalen kartesischen Koordinatensystem enthält (Nullpunkt in der Mitte der Front des eigenen Fahrzeugs, x-Achse in Fahrzeuglängsrichtung und Y-Achse in Querrichtung). Außerdem enthält dieser Datensatz auch die entsprechenden Komponenten vx, vy der Relativgeschwindigkeit sowie die Komponenten ax, ay der Relativbeschleunigung. Wenn die Ortskoordinate dy innerhalb eines bestimmten Bereiches liegt, der etwa der Breite der eigenen Fahrspur entspricht, so wird für dieses Objekt die Umwelthypothese "potentielles Hindernis" generiert, und die entsprechenden Orts-, Geschwindigkeits- und Beschleunigungsdaten werden als Ausgabedaten an die Teilhypothese U1b übergeben.

Dabei ist zu berücksichtigen, daß aufgrund unvermeidlicher Meßungenauigkeiten und Störeinflüsse die Größen dx, dy, vx, vy, ax und ay nicht exakt gemessen und berechnet werden können, sondern für diese Größen nur eine bestimmte Wahrscheinlichkeitsverteilung angegeben werden kann. Es sind diese Wahrscheinlichkeitsverteilungen, die an die Teilhypothese U1b übergeben werden. In Figur 1 wird dies dadurch symbolisiert, daß die Größen dx, dy, ... in Klammern gesetzt sind.

Bei der Erzeugung der Umwelthypothese U1b wird dann anhand der erhaltenen Daten entschieden, ob es sich um ein echtes Hindernis handelt. Ein Entscheidungskriterium kann z.B. darin bestehen, ob die vom Radarsensor empfangene Signalamplitude für dieses Objekt einen gewissen Mindestabstand zum Rauschpegel aufweist. Im diesem Fall würden vom Sensor S1 auch die jeweiligen Signalamplituden an die Teilhypothese U1a übermittelt und von dieser an die Teilhypothese U1b weitergeleitet. Ein weiteres Kriterium könnte darin bestehen, daß ein echtes Hindernis stabil über einen gewissen Zeitraum hinweg geortet werden muß und dabei ein physikalisch mögliches Bewegungsmuster zeigt, also beispielsweise nicht unstetig zwischen verschiedenen Orten springt. In diesem Fall müßten bei der Teilhypothese U1b die Ergebnisse aus vorangegangenen Meßzyklen herangezogen werden, und das im aktuellen Meßzyklus geortete Objekt müßte mit einem der in den vorangegangenen Zyklen georteten Objekte identifiziert werden.

Wenn der Sensor S1 mehrere Objekte gleichzeitig ortet, so wird für jedes Objekt eine gesonderte Teilhypothese U1a erstellt, auf der Grundlage derselben Begriffsdefinition aber jeweils mit anderen Ausgabedaten dx, dy, .... Bei der Erzeugung der Teilhypothese U1b werden dann die "unechten" Hindernisse ausgefiltert, und nur die Daten der echten Hindernisse werden an die nachfolgenden Instanzen weitergegeben.

Eine der nachfolgenden Instanzen ist im gezeigten Beispiel die Assistenzfunktion F2, die beispielsweise die Ausgabe eines Kollisionswarnsignals an den Fahrer bewirkt, sofern ein echtes Hindernis erkannt wurde, von dem eine akute Kollisionsgefahr ausgeht. Im Rahmen dieser Assistenzfunktion werden daher die Wahrscheinlichkeitsverteilungen für die verschiedenen Größen dx, dy, ... danach bewertet, wie groß die Kollisionsgefahr ist.

Als Maß für die Größe der Kollisionsgefahr kann beispielsweise der Verzögerung des eigenen Fahrzeugs dienen, die zur Abwendung der Kollision erforderlich wäre. Bei der Auswertung der verschiedenen Wahrscheinlichkeitsverteilungen wird dabei jeweils der ungünstigste Fall zugrundegelegt, also beispielsweise wird als Mindestabstand dxₘᵢₙ der kleinste Abstand genommen, für den noch eine gewisse Wahrscheinlichkeit dafür besteht, daß sich das Hindernis dort befindet. Entsprechendes gilt für die übrigen Größen.

Die Ausgabedaten der Umwelthypothese U1b werden parallel auch an die Umwelthypothese U_{1c} ausgegeben. Hier wird geprüft, ob sich unter den echten Hindernissen, für die die Umwelthypothese U1b gilt, ein Folgefahrzeug befindet. Dies setzt zunächst voraus, daß die Assistenzfunktion F1 aktiv ist und sich im Folgemodus befindet. Sofern im Rahmen dieser Assistenzfunktion nur eine Abstandsregelung auf fahrende Fahrzeuge vorgesehen ist, müßte weiterhin die Bedingung erfüllt sein, daß die Absolutgeschwindigkeit des Objekts von 0 verschieden ist (die Absolutgeschwindigkeit erhält man aus der Differenz zwischen der Relativgeschwindigkeit vx und der Geschwindigkeit des eigenen Fahrzeugs). Sofern diese Bedingung für mehrere echte Hindernisse erfüllt ist, wird das Hindernis mit dem kleinsten Abstand dx als Folgefahrzeug ausgewählt. Für dieses Folgefahrzeug werden dann die wahrscheinlichsten Werte der für die Abstandsregelung benötigten Größen dx, vx und ax an die Assistenzfunktion F1 übergeben. Dabei kann nun auf die Berechnungsergebnisse zurückgegriffen werden, die bereits bei der Erzeugung der Teilhypothesen U1a und U1b erhalten wurden, so daß unnötige Doppelberechnungen vermieden werden.

Auf diese Weise läßt sich erreichen, daß jede der Assistenzfunktionen F1 und F2 mit minimalem Aufwand mit den benötigten, speziell an die betreffende Funktion angepaßten Daten versorgt werden kann.

Zum Vergleich zeigt Figur 2 ein Blockdiagramm für den analogen Fall, in dem anstelle einer strukturierten, in Teilhypothesen gegliederten Umwelthypothese lediglich implizite Umwelthypothesen U1 und U2 verwendet werden, die jeweils spezifisch an die betreffende Assistenzfunktion F1 bzw. F2 angepaßt sind. Selbst wenn für beide Assistenzfunktionen nur ein einziger Sensor S1 vorhanden ist, müssen dann die Rohdaten dieses Sensors parallel verarbeitet werden; so daß zumindest einige der Berechnungen mehrfach ausgeführt werden müssen.

Figur 3 zeigt ein Beispiel für eine Datenstruktur einer einzelnen Teilhypothese in Figur 1.

Diese Datenstruktur ist in der Datenverarbeitungseinrichtung 10 vordefiniert und umfaßt einen fest gespeicherten statischen Teil mit zwei Blöcken DEF und ALG sowie einen dynamischen Teil zur Speicherung von Variablen EXIST, R'1, .. R'n. Eingangsdaten R1, ... Rn werden den Blöcken DEF und ALG des statischen Teils zugeführt. Bei diesen Eingangsdaten handelt es sich entweder um die Daten des Sensors S1 oder um Ausgabedaten einer in der logischen Struktur vorangehenden Teilhypothese. Ergänzend können Daten zugeführt werden, die sich beispielsweise auf den Status der Assistenzfunktionen F1, F2 oder sonstige Randbedingungen beziehen.

Im Block DEF sind die Definitionskriterien für den Begriff spezifiziert, der durch die Teilhypothese repräsentiert wird. Im Block ALG sind die Algorithmen spezifiziert, mit denen aus den Eingangsdaten R1, ..., Rn die Ausgangsdaten R'1, ..., R'n berechnet werden, die an die nachfolgende(n) Instanz(en) zu übergeben sind Die Eingangsdaten R1, ..., Rn (oder ggf. auch die mit Hilfe der Algorithmen daraus berechneten Ausgabedaten R'1, ..., R'n) werden darauf geprüft, ob sie die gespeicherten Definitionskriterien erfüllen. Das Ergebnis dieser Prüfung bestimmt den Wert eines Existenzparameters EXIST, der angibt, ob die Teilhypothese (für mindestens ein Objekt) existiert oder nicht. Sofern die Teilhypothese für mehrere Objekte existiert, wird dies ebenfalls durch den Existenzparameter angegeben. Der Existenzparameter kann die Form einer Ja/Nein-Aussage haben, wahlweise kann es sich jedoch auch um eine Existenzwahrscheinlichkeit zwischen 0 und 1 handeln, die im Sinne einer Fuzzy-Logic verarbeitet wird.

Der Existenzparameter und die Ausgabedaten R'1, ... R'n werden dann an die nachfolgende Instanz oder die mehreren nachfolgenden Instanzen übergeben, also beispielsweise im Fall der Teilhypothese U1b an die Teilhypothese U1c und die Assistenzfunktion F2. Wenn die in Figur 3 gezeigte Datenstruktur die Teilhypothese U1b repräsentiert, so würde sie ihrerseits auch einen Existenzparameter von der Teilhypothese U1a erhalten, wie in Figur 3 durch einen gestrichelten Pfeil angedeutet wird, und die Teilhypothese U1b würde nur unter der Bedingung generiert, daß die Teilhypothese U1a für mindestens ein Objekt erfüllt ist.

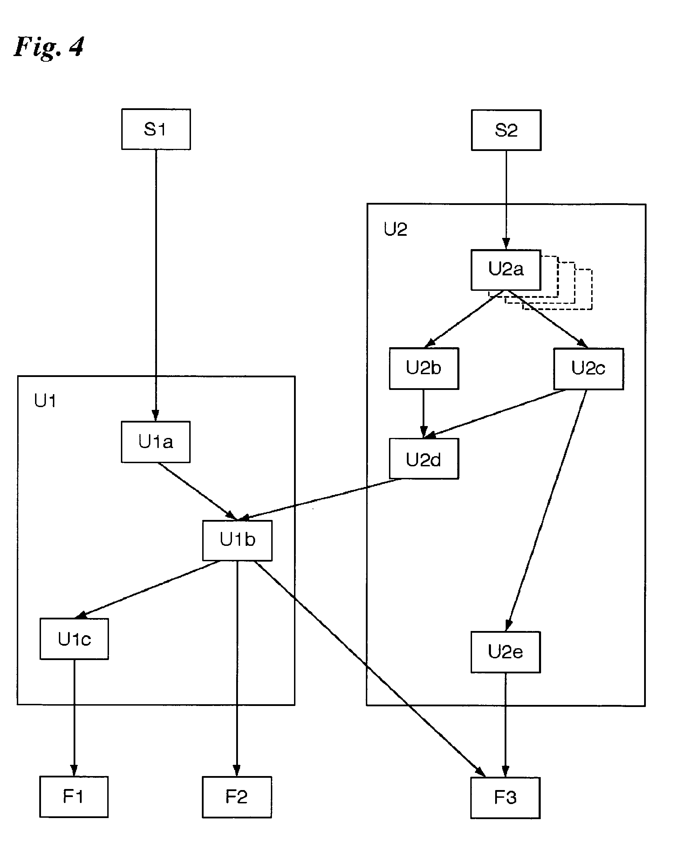

Figur 4 zeigt eine denkbare Erweiterung des Fahrerassistenzsystems nach Figur 1. Als zusätzliche Assistenzfunktion F3 ist hier eine Spurverlassenswarnung vorgesehen, d.h., der Fahrer erhält einen Warnhinweis, wenn er im Begriff ist, die Grenzen der eigenen Fahrspur zu überfahren. Zu diesem Zweck ist als zusätzlicher Sensor S2 beispielsweise ein Videosensor vorhanden, und die Auswertung der Daten dieses Videosensors erfolgt gemäß einer Umwelthypothese U2, die wiederum eine vernetzte Struktur mit mehreren Teilhypothesen U2a, U2b, U2c, U2d und U2e aufweist. Die einzelnen Teilhypothesen haben hier beispielsweise die folgende Bedeutung:
U2a: Der Videosensor hat mindestens ein Objekt erkannt. Im Fall mehrerer Objekte wird eine entsprechende Vielzahl von Kopien der Teilhypothese U2a generiert.
U2b: Bei dem Objekt handelt es sich um ein räumliches, in vertikaler Richtung ausgedehntes Objekt. Dies läßt sich anhand bestimmter geometrischer Merkmale des Bildes des Objekts erkennen, bzw. anhand bestimmter Merkmale der scheinbaren Bewegung des Objekts, die durch die Eigenbewegung der Kamera verursacht wird.
U2c:Das Objekt ist ein flächiges Objekt, nämlich eine Fahrbahnmarkierung, und definiert die linken und rechten Grenzen der Fahrspur.
U2d: Das räumliche Objekt, das in U2b erkannt wurde, befindet sich innerhalb der Fahrspur.
U2e: Das eigene Fahrzeug ist im Begriff, eine Fahrspurgrenze zu überqueren.

Bei der Umwelthypothese U2 wird eine effiziente Datenverarbeitung dadurch erreicht, daß die Teilhypothesen U2b und U2c gemeinsam auf die Ergebnisse der Teilhypothese U2a zurückgreifen. Ähnlich werden auch bei der Teilhypothese U2d die Ergebnisse der Teilhypothesen U2b und U2c kombiniert.

Die Ergebnisse der Teilhypothese U2d fließen nun ihrerseits in die Teilhypothese U1b ein, d.h., sie tragen zu der Entscheidung bei, ob es sich bei dem Objekt um ein echtes Hindernis handelt. Ein echtes Hindernis muß hier also nicht nur die Kriterien erfüllen, die in Zusammenhang mit Figur 1 erläutert wurden, sondern zusätzlich auch das Kriterium, daß ungefähr an dem Ort, der durch die Teilhypothese U1a spezifiziert wird, auch vom Videosensor ein räumliches Objekt erkannt wird. Diese Systemerweiterung ermöglicht so eine verläßlichere Unterscheidung zwischen echten Hindernissen und Scheinhindernissen wie z.B. einer auf der Straße liegenden Blechdose, die zwar ein Radarecho erzeugt aber vom Videosensor nicht als räumliches Objekt qualifiziert wird.

Weiterhin werden hier die Ergebnisse der Teilhypothese U1b (echtes Hindernis) auch der Assistenzfunktion F3 (Spurverlassenswarnung) zur Verfügung gestellt. Wenn beispielsweise die Teilhypothese U2a besagt, daß das eigene Fahrzeug im Begriff ist, die linke Spurgrenze zu überqueren, und gleichzeitig die Teilhypothese U1b besagt, daß sich ein echtes Hindernis auf der eigenen Spur befindet, so ist davon auszugehen, daß der Fahrer nicht versehentlich die linke Spurgrenze überquert, sondern absichtlich auf die linke Nebenspur wechseln will, um dem Hindernis auszuweichen. In diesem Fall kann somit die überflüssige Spurverlassenswamung unterdrückt werden. Dieses Beispiel illustriert, wie der modulare Aufbau der Umwelthypothesen U1 und U2 die Erweiterung der Funktionalität um zusätzliche Assistenzfunktionen und Prüfkriterien erleichtert und dabei zugleich eine effiziente Datenverarbeitung unter weitgehender Ausnutzung bereits vorhandener Ergebnisse sicherstellt.

## Patentansprüche

1. Fahrerassistenzsystem für Kraftfahrzeuge, mit einer Sensoreinrichtung (S1, S2) zur Messung von Daten über die Umwelt des Fahrzeugs, mindestens zwei Assistenzfunktionen (F1, F2, F3), die von den gemessenen Daten abhängig sind, und einer Datenverarbeitungseinrichtung (10), die die gemessenen Daten auswertet und für jede Assistenzfunktion mindestens eine spezifische Umwelthypothese generiert, die Ausgabedaten in einer für die betreffende Assistenzfunktion aufbereiteten Form bereitstellt, wobei in der Datenverarbeitungseinrichtung (10) mindestens eine Umwelthypothese (U1, U2) vordefiniert ist, die eine in mehrere Teilhypothesen (U1a, U1b, U1c; U2a - U2e) gegliederte Struktur aufweist und bei der die Teilhypothesen derart in einer logischen Beziehung zu einander stehen, dass Ausgabedaten der einen Teilhypothese (U1b) in die Generierung der anderen Teilhypothese (U1c) einfließen, **dadurch gekennzeichnet, dass** die mindestens zwei Assistenzfunktionen (F1, F2) mittelbar oder unmittelbar auf eine gemeinsame Teilhypothese (U1b) zugreifen.

## Claims

1. Driver assistance system for motor vehicles, having a sensor device (S1, S2) for measuring data about the environment of the vehicle, at least two assistance functions (F1, F2, F3) which are dependent on the measured data, and a data-processing device (10) which evaluates the measured data and generates, for each assistance function, at least one specific environmental hypothesis which makes available output data in a form which has been conditioned for the respective assistance function, wherein at least one environmental hypothesis (U1, U2) is predefined in the data-processing device (10), which has a structure divided into a plurality of component-hypotheses (U1a, U1b, U1c; U2a-U2e), and in which environmental hypothesis (U1, U2) the component-hypotheses are logically related to one another in such a way that output data of the one component-hypothesis (U1b) are included in the generation of the other component-hypothesis (Ulc), **characterized in that** the at least two assistance functions (F1, F2) access a common component-hypothesis (U1b) indirectly or directly.

## Revendications

1. Système d'assistance au conducteur d'un véhicule automobile,
doté d'un dispositif de détecteurs (S1, S2) qui mesurent des données concernant l'environnement du véhicule,
d'au moins deux fonctions d'assistance (F1, F2, F3) qui dépendent des données mesurées et
d'un dispositif (10) de traitement de données qui évalue les données mesurées et qui génère pour chaque fonction d'assistance au moins une hypothèse spécifique d'environnement qui délivre les données de sortie sous une forme préparée pour la fonction d'assistance concernée,
au moins une hypothèse d'environnement (U1, U2) qui présente une structure constituée de plusieurs hypothèses partielles (U1a, U1b, U1c; U2a-U2e) et pour laquelle les hypothèses partielles sont associées logiquement de telle sorte que les données de sortie d'une des hypothèses partielles (U1b) agissent sur la formation de l'autre hypothèse partielle (Ulc) étant prédéfinie dans le dispositif (10) de traitement de données,
**caractérisé en ce que**
les deux ou plusieurs fonctions d'assistance (F1, F2) se réfèrent directement ou indirectement à une hypothèse partielle (U1b) commune.
